Europäisches Patentamt

European Patent Office

Office européen des brevets

(11) Veröffentlichungsnummer : **0 210 546**
**B1**

(12) **EUROPÄISCHE PATENTSCHRIFT**

(45) Veröffentlichungstag der Patentschrift :
07.03.90

(21) Anmeldenummer : 86109777.2

(22) Anmeldetag : 16.07.86

(51) Int. Cl.⁵ : **F 01 N 3/28**, B 01 J 35/04,
B 21 D 13/10

(54) Metallischer, gewickelter Abgaskatalysatorträgerkörper mit geometrisch komplizierter Form des Querschnitts sowie Verfahren zu seiner Herstellung.

(30) Priorität : 29.07.85 DE 3527111

(43) Veröffentlichungstag der Anmeldung :
04.02.87 Patentblatt 87/06

(45) Bekanntmachung des Hinweises auf die Patenterteilung : 07.03.90 Patentblatt 90/10

(84) Benannte Vertragsstaaten :
AT BE CH DE FR GB IT LI LU NL SE

(56) Entgegenhaltungen :
FR--A-- 2 250 569
GB--A-- 2 072 064
GB--A-- 2 079 174

(73) Patentinhaber : INTERATOM Gesellschaft mit beschränkter Haftung
Friedrich-Ebert-Strasse
D-5060 Bergisch-Gladbach 1 (DE)

(72) Erfinder : Cyron, Theodor
Kurt-Schumacher-Strasse 12
D-5060 Bergisch Gladbach (DE)

(74) Vertreter : Fuchs, Franz-Josef, Dr.-Ing. et al
Postfach 22 13 17
D-8000 München 22 (DE)

EP 0 210 546 B1

**Beschreibung**

Die vorliegende Erfindung betrifft einen metallischen, gewickelten Abgaskatalysatorträgerkörper mit geometrisch komplizierter Form des Querschnitts nach dem Oberbegriff des Anspruchs 1 und ein Verfahren zu seiner Herstellung.

Aus der DE-A-23 02 746 sind ein metallischer, gewickelter Abgaskatalysatorträgerkörper, ein Verfahren und eine Vorrichtung zu seiner Herstellung bekannt.

Abgaskatalysatoren werden, insbesondere bei Personenkraftwagen, im allgemeinen unter der Bodenwanne angeordnet, wo jedoch wegen der notwendigen Bodenfreiheit nur begrenzter Raum zur Verfügung steht. Es besteht daher der Wunsch, keine zylindrischen Katalysatorträgerkörper, sondern flachere und in der Form an die speziellen Gegebenheiten angepaßte Katalysatorträgerkörper herzustellen. Dies stößt jedoch bei gewickelten Katalysatorträgerkörpern auf erhebliche Schwierigkeiten bei der Herstellung. Wie anhand der Zeichnung noch näher erläutert wird, ist es sehr einfach rotationssymmetrische, spiralig gewickelte- Katalysatorträgerkörper herzustellen, und auch flachere Formen, die sich durch Zusammendrücken eines spiralig gewickelten Hohlzylinders erreichen lassen, bereiten noch keine Probleme. Alle anderen Formen jedoch, die auf diese Weise nicht direkt herstellbar sind (im folgenden allgemein als komplizierte Querschnitte bezeichnet), lassen sich mit den herkömmlichen Wickelvorrichtungen nicht herstellen.

Aufgabe der vorliegenden Erfindung ist daher die Schaffung eines metallischen, gewickelten Abgaskatalysatorträgerkörpers mit geometrisch komplizierter Form des Querschnittes, um eine bessere Anpassung an die Platzverhältnisse unter der Bodenwanne eines Kraftfahrzeuges zu ermöglichen. Dabei soll ein entsprechendes Herstellverfahren für unterschiedliche komplizierte Querschnitte gleichermaßen geeignet sein.

Zur Lösung dieser Aufgabe dient für Querschnitte ohne Engstelle ein metallischer, gewickelter Abgaskatalysatorträgerkörper gemäß Anspruch 1. Ein solcher Katalysatorträgerkörper ist trotz des geometrisch komplizierten Querschnittes des Mantelrohres gewickelt und füllt den Querschnitt so aus, als sei die Wicklung von außen nach innen dicht ausgeführt worden (was technisch wirtschaftlich nicht möglich ist). Der Beginn bzw. das Ende der Blechbänder liegt dabei etwa auf dem Mittelpunkt eines größten in den Querschnitt einschreibbaren Kreises. Im allgemeinen wird ein solcher Abgaskatalysatorträgerkörper nach dem Einsetzen in das Mantelrohr auch einer fügetechnischen Behandlung unterzogen, bei der beispielsweise die gewellten und glatten Blechstreifen untereinander verlötet werden.

In weiterer Ausgestaltung der Erfindung für Querschnitte mit Engstelle wird im Anspruch 2 ein metallischer, gewickelter Abgaskatalysator beschrieben, der aus zwei oder mehr Teilwicklungen besteht, welche jeweils Teile des Gesamtquerschnittes ausfüllen, wie anhand der Zeichnung näher erläutert wird.

Zur Herstellung solcher Abgaskutalysatorträgerkörper ohne Engstelle im Querschnitt wird ein Verfahren mit den kennzeichnenden Merkmalen des Anspruchs 3 vorgeschlagen. Wie anhand der Zeichnung näher erläutert wird, lassen sich kompliziertere Querschnitte nicht mehr durch elastisches Verformen von hohlzylindrischen, spiralförmigen Wicklungen aus glatten und gewellten Blechstreifen ausfüllen. Es hat sich jedoch gezeigt, daß auch unregelmäßige Formen von einem gewickelten Rohling ausgefüllt werden können, wenn dieser Rohling nicht fest gewickelt ist, sondern zumindest teilweise aus lose gewickelten Wicklungen besteht, die jedoch zur Stabilisierung des Rohlings an einer Seite jeweils punktuell miteinander verbunden sind, so daß dort ein eng gewickelter Bereich entsteht. Für jede Querschnittsfläche, die keine Engstelle aufweist, läßt sich ausmessen oder berechnen, wie lang jede einzelne Windung sein muß, damit ein Mantelrohr mit dieser Querschnittsfläche vollständig mit dicht aneinanderliegenden gewellten und glatten Blechstreifen ausgefüllt werden kann.

In weiterer Ausgestaltung des Verfahrens wird im Anspruch 4 für Querschnittsflächen, die mindestens eine Engstelle oder eine anderweitig besonders komplizierte Geometrie aufweisen vorgeschlagen, solche Querschnittsflächen in einfacher geformte Flächen zu unterteilen und mehrere Rohlinge für diese einfacheren Querschnitte herzustellen und nacheinander oder gleichzeitig in das Mantelrohr einzusetzen. Dabei können entweder in dem Mantelrohr Stege zur Unterteilung vorgesehen werden oder aber es kann eine « fiktive » Unterteilung vorgenommen werden, auf der dann die Maße der Rohlinge beruhen und die sich beim Einsetzen der Rohlinge in das Mantelrohr dann tatsächlich durch die Grenzflächen der einzelnen Rohlinge ausbildet.

Als Vorprodukt bei der Herstellung eines solchen metallischen Abgaskatalysatorträgerkörpers wird ein geeigneter Rohling benötigt. Dieser Rohling zeichnet sich dadurch aus, daß die einzelnen Wicklungen zumindest teilweise von der idealen, dicht gewickelten Spiralform abweichen, indem sie länger sind als für eine dicht gewickelte Spirale nötig wäre. Außerdem sind aufeinanderfolgende Wicklungen auf einer Seite des Rohlings aneinandergeheftet, vorzugsweise punktgeschweißt, so daß eine Seite des Rohlings dicht und der übrige Bereich zumindest teilweise lose gewickelt ist. Die Punktschweißung auf einer Seite verhindert, daß beim Handhaben des Rohlings sich dieser in eine hohlzylindrische Spiralform auseinanderwickelt.

Dabei gibt es zwei Möglichkeiten für die Anordnung der einzelnen Wicklungen, nämlich einerseits Wicklungen mit einer glatten Lage als Außenseite und andererseits Wicklungen mit einer gewellten Lage als Außenseite. Beide Möglichkeiten haben verschiedene Vor- und Nachteile, die sich bei der späteren Handhabung und der Befestigung im Mantelrohr in an sich bekannter Weise auswirken.

In der Zeichnung sind die Theorie zu der vorliegenden Erfindung und Ausführungsbeispiele mit ihren wesentlichen Merkmalen, teils schematisch, dargestellt. Es zeigen :

Figur 1 und 2 einfach herzustellende Querschnittsformen von Abgaskatalysatorträgerkörpern,

Figur 3, 4 und 5 kompliziertere Querschnittsformen, die mit dem erfindungsgemäßen Verfahren hergestellt werden können,

Figur 6 einen Rohling in schematischer Darstellung,

Figur 7 ein Beispiel für einen fertiggestellten Katalysatorträgerkörper mit komplizierterem Querschnitt,

Figur 8 eine schematisch dargestellte Vorrichtung zur Herstellung eines Rohlings, und

Figur 9 einen besonders komplizierten Querschnitt für einen Abgaskatalysatorträgerkörper, der selbst mit dem erfindungsgemäßen Verfahren erst nach einer Unterteilung in einfachere Querschnittsflächen hergestellt werden kann.

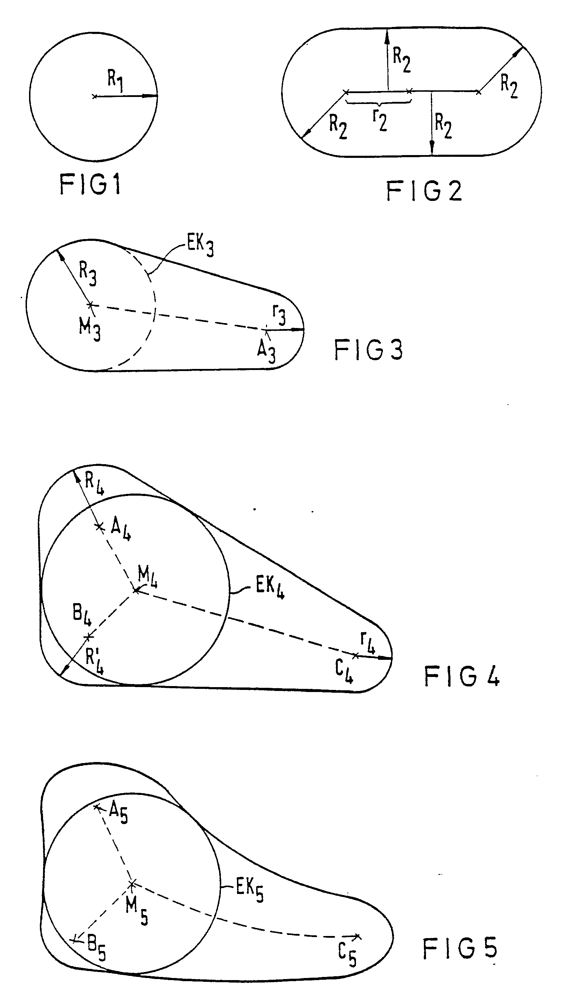

Figur 1 zeigt den am leichtesten herzustellenden und bekannten kreisförmigen Querschnitt für einen spiralig gewickelten Katalysatorträgerkörper mit dem Radius $R_1$.

Auch der in Figur 2 dargestellte Querschnitt läßt sich mit den bekannten Methoden noch einfach herstellen, nämlich durch das Zusammendrücken eines spiralig gewickelten Hohlzylinders mit einem wicklungsfreien Innenkreis mit dem Radius $r_{2/\pi}$ und einem eng gewickelten Hohlzylinderring mit der Dicke $R_2$.

In den Figuren 3, 4 und 5 sind zunehmend kompliziertere Querschnitte für Abgaskatalysatorträgerkörper dargestellt. Diese drei dargestellten Formen dienen als Beispiel für Formen, die sich mit dem erfindungsgemäßen Verfahren verwirklichen lassen. Solche Keilformen mit abgerundeten Ecken oder daraus durch leichte Verformung der Seiten entstehende Abwandlungen sind mit herkömmlichen Mitteln, d. h. durch Wickeln, nicht herstellbar. Es sind zwar Methoden vorgeschlagen worden, die auf ein Schichten von in der Länge zurechtgeschnittenen oder mäanderförmig geknickten Blechstreifenabschnitten hinauslaufen, jedoch sind diese Verfahren sehr aufwendig und erfordern komplizierte Herstellungsvorrichtungen.

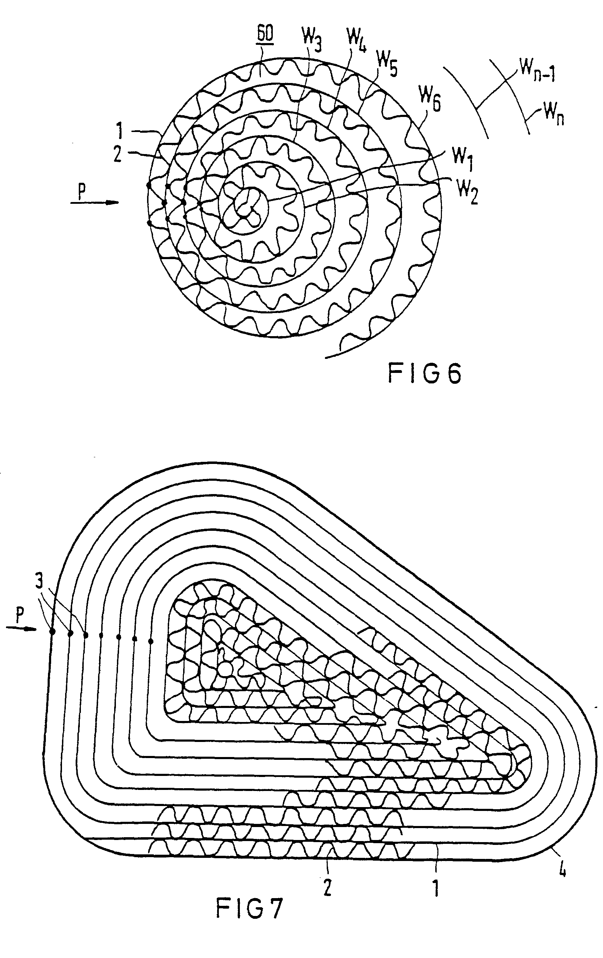

Wie aus Figur 7 beispielhaft zu entnehmen ist, lassen sich jedoch mehr oder weniger unregelmäßige Keilformen rein Prinzipiell mit Wicklungen aus glatten und gewellten Blechstreifen ausfüllen. Dies erkennt man theoretisch am leichtesten, wenn man beginnt, eine solche Querschittsfläche von außen nach innen mit Wicklungen auszufüllen. Leider läßt sich ein solches Herstellungsverfahren technisch nicht mit vertretbarem Aufwand verwirklichen. Die theoretische Überlegung zeigt jedoch, daß es zu jeder solchen Querschnittsform einen geeigneten Rohling geben muß, der vorgeformt werden und durch eine geeignete Einführvorrichtung in ein Mantelrohr der betreffenden Querschnittsfläche eingeführt werden kann, so daß er dieses genau ausfüllt.

Es hat sich gezeigt, daß ein Rohling für solche Querschnittsflächen nicht eng spiralig gewickelt sein darf, sondern daß die Länge jeder einzelnen Windung entsprechend der vorgesehenen späteren Querschnittsform gewählt werden muß. Ein geeigneter Rohling muß daher zumindest in Teilbereichen lose gewickelt sein, d. h. mit Spalten zwischen den einzelnen Blechlagen. Damit ein solcher Rohling bei der Handhabung nicht einfach zu einem Hohlzylinder auseinander springt, muß jede Windung nach einem vollen Umlauf in Bezug auf die vorhergehenden Lage vorfixiert werden, beispielsweise durch Punktschweißen oder ähnliche fügetechnische Verfahren oder durch eine vorübergehend eingreifende Haltevorrichtung. Auf diese Weise entsteht dann ein exzentrischer oder unregelmäßig eiförmiger Rohling, welcher jeweils für eine ganz bestimmte Schar von Querschnittsformen geeignet ist.

Einige weitere Eigenschaften, die zum Verständnis der Erfindung nützlich sind, seien noch anhand der Figuren 3 bis 7 erläutert. Jede der unregelmäßigen Keilformen weist einen größtmöglichen eingeschriebenen Kreis auf. In Figur 3 ist dies der Kreis $EK_3$ mit dem Radius $R_3$ um den Punkt $M_3$. Dieser fällt teilweise mit der Begrenzung der Querschnittsfläche zusammen. In Figur 4 ist dies der Kreis $EK_4$ um den Mittelpunkt $M_4$, der die Umfangslinie der Querschnittsfläche an drei Stellen berührt. Entsprechend ist in Figur 5 der größte eingeschriebene Kreis $EK_5$ um den Mittelpunkt $M_5$. Dieser eingeschriebene Kreis hat eine besondere Bedeutung für die vorliegende Erfindung, da nämlich die eng gewickelte, vorfixierte Seite P eines Rohlings beim Einsetzen in ein Mantelrohr näherungsweise nur in dem Bereich liegen kann, in dem der eingeschriebene Kreis die Umfangslinie berührt. Ansonsten wären zu starke Verformungskräfte auf die punktuellen Verbindungen zu befürchten bzw. die vorgegebene Querschnittsfläche ließe sich nicht problemlos mit dem Rohling füllen.

In den Figuren 3 und 4 ist angenommen, daß die abgerundeten Ecken der Keilform jeweils bestimmte Krümmungsradien haben. In Figur 3 hat die eine Ecke den Krümmungsradius $R_3$ und die andere Ecke ist ein Teil eines Kreises um den Punkt $A_3$ mit dem Radius $r_3$. Ein Rohling für eine solche Form weist im inneren Bereich lose Windungen mit etwa gleich großen Zwischenräumen auf, während er im äußeren Bereich eine Schicht fester Wicklungen mit der Dicke $r_3$ aufweisen muß.

Komplizierter sind die Verhältnisse bei einer Querschnittsfläche gemäß Figur 4, da dort drei verschiedene Krümmungsradien für die Ecken, nämlich $R_4$, $R'_4$ und $r_4$ auftreten mit den Krümmungsmittelpunkten $A_4$, $B_4$ bzw. $C_4$. Ein entsprechender Rohling muß im äußeren Bereich wiederum eine eng gewickelte Schicht der Dicke $r_4$

aufweisen, jedoch sind im übrigen die Längen der Windungen durch Messen oder Rechnen zu bestimmen.

Für ganz unregelmäßige Formen, wie sie in Figur 5 dargestellt sind, ist die Form des Rohlings nur noch durch Angabe aller einzelnen Windungslängen zu beschreiben. Diese können jedoch durch Rechnen oder Probieren bestimmt werden.

Wie Figur 7 beispielhaft zeigt, entstehen beim Füllen eines Mantelrohres mit Rohlingen bestimmte Knicklinien. Diese ziehen sich, wie in den Figuren 3 bis 5 durch gestrichelte Linien angedeutet auf bestimmten Linien von den Krümmungsmittelpunkten der Ecken etwa zum Mittelpunkt des eingeschriebenen Kreises. Bei unregelmäßigen Formen, wie in Figur 5, verlaufen diese nicht unbedingt gradlinig, sondern entlang einer gegebenenfalls gekrümmten Mittellinie zwischen den benachbarten Umfangslinien, wie bei den Strecken $\overline{M_5A_5}$, $\overline{M_5B_5}$ und $\overline{M_5C_5}$ angedeutet.

Figur 6 zeigt in schematischer Darstellung die innersten Windungen $W_1$, $W_2$, $W_3$. .., $W_{n-1}$, $W_n$ eines Rohlings. Dieser besteht aus zumindest teilweise locker aufgewickelten Windungen, von denen jede aus einem glatten 1 und einem gewellten 2 Blechstreifen besteht. Dabei kann der glatte Blechstreifen 1 einer Windung sowohl außen wie innen liegen. Auf einer Seite P des Rohlings sind die einzelnen Windungen jeweils gegen Verschiebungen vorfixiert, vorzugsweise in einem kleinen Bereich punktverschweißt 3. Der ganze Rohling 60 hat dabei eine exzentrische auf die vorgesehene spätere Querschnittsform abgestimmte Gestalt. In Teilbereichen, insbesondere im äußeren Bereich, kann der Rohling 60 auch eng gewickelte Windungen aufweisen.

Figur 7 zeigt den bereits fertiggestellten Abgaskatalysatorträgerkörper mit einer etwa keilförmigen Querschnittsfläche. Die glatten 1 und die gewellten 2 Blechstreifen liegen nunmehr in der endgültigen Form innerhalb des Mantelrohres 4 dicht beieinander, so daß die vorgesehenen Kanäle zwischen den einzelnen Lagen gebildet werden, ohne das irgendwo zu große Öffnungen übrigbleiben. In einem Bereich P, in dem der eingeschriebene Kreis das Mantelrohr 4 berührt, liegen die bei der Herstellung des Rohlings erzeugten Verbindungspunkte 3.

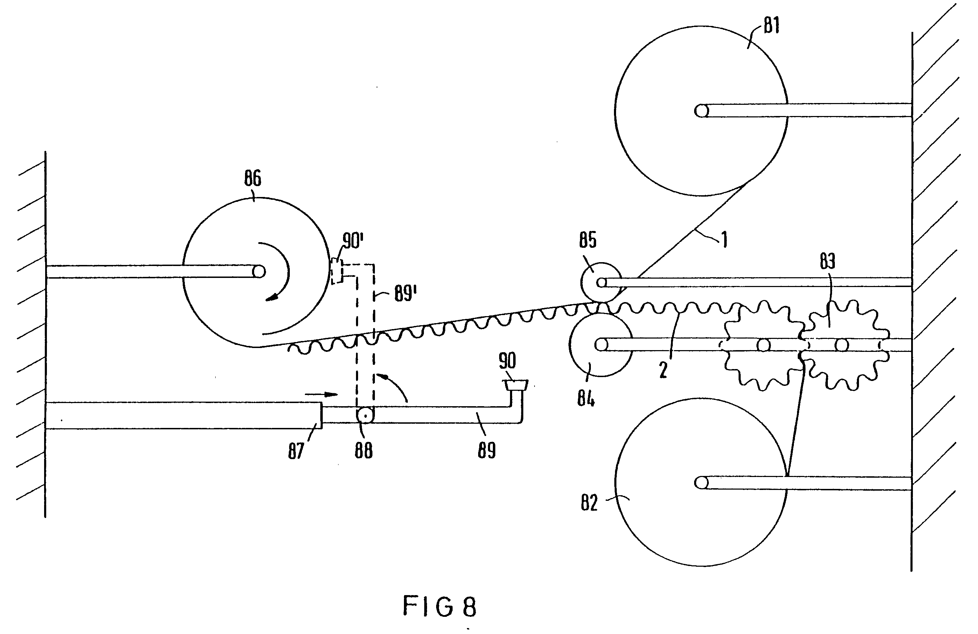

Figur 8 zeigt in schematischer Darstellung eine modifizierte Wickelvorrichtung, welche das Abmessen unterschiedlicher Windungslängen ermöglicht. Zwei Vorratsrollen 81, 82 enthalten zunächst glatte Blechstreifen. In einer Wellvorrichtung 83 wird der eine Blechstreifen gewellt und über Umlenkrollen 84, 85 werden der glatte 1 und der gewellte 2 Blechstreifen einer Wickelvorrichtung 86 zugeführt. Diese Wickelvorrichtung 86 wickelt jedoch nicht wie bei den herkömmlichen Verfahren einfach beide Blechstreifen spiralförmig auf, sondern arbeitet mit einem Teleskoparm 87, 89 zusammen. Dieser Teleskoparm weist ein Gelenk 88 und einen Greif- oder Magnetkopf 90 auf. Ein Arbeitstakt der Vorrichtung enthält nacheinander oder gleichzeitig folgende Schritte :

Die Wickelvorrichtung 86 macht eine Drehung von 360°. Der Teleskoparm 87, 89 fährt auf die für die nächste Wicklung vorgesehene Länge aus und klappt in dem Gelenk 88 gegen die zulaufenden Blechstreifen 1, 2 und mit diesen gegen den schon gewickelten Teil des Rohlings in die Stellung 89 ; 90. Der Kopf 90 des Teleskoparmes weist eine Greif- oder Magnetvorrichtung auf, mit welcher die Blechstreifen 1, 2 an der gewünschten Stelle gehalten und zur Wickelvorrichtung 86 bewegt werden können. Vorzugsweise ist in dem Kopf 90 auch eine Punktschweißvorrichtung integriert, welche ein Anheften der einzelnen Windungen an die jeweils vorhergehende Lage ermöglicht. Der Teleskoparm 87, 89 und die Wickelvorrichtung 86 sind vorzugsweise durch eine programmierbare Steuerung ansteuerbar, so daß jeweils vorgegebene und gespeicherte Längen nacheinander auf die Wickelvorrichtung 86 aufgebracht werden können.

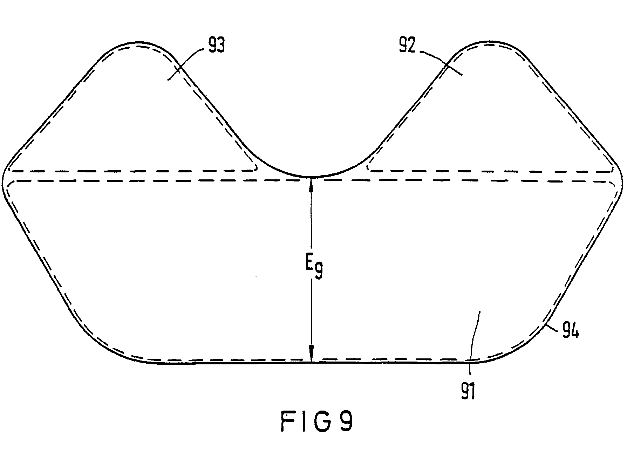

Schließlich ist in Figur 9 noch eine Querschnittform eines Abgaskatalysatorträgerkörpers dargestellt, welche sich nicht ohne weiteres nach dem bisher beschriebenen Verfahren herstellen läßt, da sie eine Engstelle $E_9$ aufweist. Derart kompliziert geformte Querschnittsflächen 94 lassen sich jedoch im allgemeinen in einfacher geformte Flächen 91, 92, 93 zerlegen, welche sich mit Rohlingen nach dem erfindungsgemäßen Verfahren ausfüllen lassen. Die jeweils günstigste Art der Zerlegung richtet sich nach der speziellen Form und den anderen Randbedingungen für eine wirtschaftliche Herstellung.

Die vorliegende Erfindung ermöglicht auf einfache Weise die Herstellung von Abgaskatalysatorträgerkörpern aus glatten und gewellten Blechen für beinahe beliebig geformte Querschnitte. Dadurch wird die Anbringung unter der Bodenwanne von Kraftfahrzeugen und gegebenenfalls die Nachrüstung bei vorgegebenen Platzverhältnissen erleichtert.

## Patentansprüche

1. Metallischer, gewickelter Abgaskatalysatorträgerkörper, der aus abwechselnden Lagen glatter (1) und gewellter (2) Blechstreifen besteht und von einem Mantelrohr (4) umgeben ist, gekennzeichnet durch folgende Merkmale :

a) Das Mantelrohr (4) weist einen beliebigen Querschnitt ohne Engstelle ($E_9$) auf — ausgenommen runde oder ovale Querschnitte.

b) Die gewickelten glatten (1) und gewellten (2) Blechstreifen füllen den Querschnitt des Mantelrohres (4) so aus, als sei eine Wicklung von außen nach innen dicht ausgeführt worden.

c) Das Zentrum der Wicklung liegt im Bereich des Mittelpunktes ($M_3$ ; $M_4$ ; $M_5$) eines größten in den Querschnitt einschreibbaren Kreises ($EK_3$ ; $EK_4$ ; $EK_5$).

2. Metallischer, gewickelter Abgaskatalysatorträgerkörper, der aus abwechselnden Lagen glatter (1) und gewellter (2) Blechstreifen besteht und von einem Mantelrohr (4) umgeben ist, gekennzeichnet durch folgende Merkmale :

a) Das Mantelrohr weist einen beliebigen Querschnitt mit mindestens einer Engstelle ($E_9$) auf.

b) Die durch das Mantelrohr (4) vorgegebene Querschnittsfläche (94) ist in einfacher geformte Teilflächen (91, 92, 93) unterteilt.

c) Die gewickelten glatten (1) und gewellten (2) Blechstreifen füllen die einfacher geformten Teilflächen (91, 92, 93) so aus, als sei eine Wicklung von außen nach innen dicht ausgeführt worden.

d) Das Zentrum dieser Wicklungen liegt jeweils im Bereich des Mittelpunktes eines größten in den jeweiligen Teilquerschnitt einschreibbaren Kreises.

3. Verfahren zur Herstellung eines metallischen Abgaskatalysatorträgerkörpers nach Anspruch 1, wobei aus abwechselnden Lagen glatter (1) und gewellter (2) Blechstreifen ein Rohling (60) gewickelt und dieser dann in ein Mantelrohr (4) eingesetzt wird, gekennzeichnet durch folgende Merkmale :

a) Jede Wicklung ($W_1$, $W_2$, ... $W_n$) aus je einem glatten (1) und einem gewellten (2) Blechstreifen wird einzeln mit einer jeweils einzeln vorgebbaren Länge erstellt. Die Länge jeder Wicklung ($W_1$, $W_2$, ... $W_n$) wird entsprechend der zur Füllung eines vorgegebenen Mantelrohrquerschnittes notwendigen Länge bestimmt, wobei das Mantelrohr (4) eine beliebige Querschnittsform ohne Engstelle ($E_9$) — ausgenommen runde oder ovale Querschnitte — aufweist.

c) Jede Wicklung ($W_1$, $W_2$, ..., $W_n$) wird zumindest an einer Seite (P) des Rohlings (60) vorfixiert (3), vorzugsweise durch Punktschweißen, so daß ein etwa eiförmiger Rohling (60) entsteht, der an dieser einen Seite (P) dicht und im übrigen Bereich unterschiedlich lose gewickelt ist.

d) Der Rohling (60) wird, vorzugsweise mit Hilfe einer konischen Einführvorrichtung, in das Mantelrohr (4) eingesetzt, und zwar so, daß die dicht gewickelte Seite (b) in einem Bereich des Mantelrohrquerschnittes liegt, in welchem ein größtmöglicher eingeschriebener Kreis ($EK_3$ ; $EK_4$ bzw. $EK_5$) des Mantelrohrquerschnittes das Mantelrohr (4) berührt.

4. Verfahren nach Anspruch 3 zur Herstellung eines metallischen Abgaskatalysatorträgerkörpers nach Anspruch 2 mit einer Querschnittsfläche (94), die mindestens eine Engstelle ($E_9$) aufweist, dadurch gekennzeichnet, daß die Querschnittsfläche (94) in einfacher geformte Flächen (91, 92, 93) unterteilt wird, Rohlinge (60) für diese einfachen Querschnitte hergestellt und nacheinander oder gleichzeitig in das Mantelrohr (4) eingesetzt werden.

**Claims**

1. Metallic wound exhaust gas catalyst carrier body consisting of alternating layers of smooth (1) and corrugated (2) sheet metal strips and surrounded by a tubular jacket (4), characterised by the following features

a) The tubular jacket (4) has any cross-section without a narrow point ($E_9$) — except round or oval cross-sections.

b) The wound smooth (1) and corrugated (2) sheet metal strips fill the cross-section of the tubular jacket (4) as if a winding had been constructed so that it is compact from the outside inwards.

c) The centre of the winding lies in the region of the central point ($M_3$ ; $M_4$ ; $M_5$) of a largest circle ($EK_3$ ; $EK_4$ ; $EK_5$) able to be drawn within the cross-section.

2. Metallic, wound exhaust gas catalyst carrier body, consisting of alternating layers of smooth (1) and corrugated (2) sheet metal strips and surrounded by a tubular jacket (4), characterised by the following features :

a) The tubular jacket has any cross-section with at least one narrow point ($E_9$).

b) The cross-sectional surface (94) specified by the tubular jacket (4) is divided into less complex shaped partial surfaces (91, 92, 93).

c) The wound smooth (1) and corrugated (2) sheet metal strips fill out the less complex shaped partial surfaces (91, 92, 93,) as if a winding had been constructed so that it is compact from outside inwards.

d) The centre of these windings lies in each case in the region of the central point of a largest circle able to be drawn in the respective partial cross-section.

3. Method for producing a metallic exhaust gas catalyst carrier body according to claim 1, wherein a blank (60) is wound from alternating layers of smooth (1) and corrugated (2) sheet metal strips and this is then inserted into a tubular jacket (4), characterised by the following features :

a) Each winding ($W_1$, $W_2$, ... $W_n$) of in each case a smooth (1) and corrugated (2) sheet metal strip is individually constructed with in each case an individually specified length. The length of each winding ($W_1$, $W_2$, ... $W_n$) is determined corresponding to the length required for filling a specified tubular jacket cross-section, wherein the tubular jacket (4) has any cross-sectional form without a narrow point (Eq) — except round or oval cross-sections.

c) Each winding ($W_1$, $W_2$, ... $W_n$) is pre-fixed at least on one side (P) of the blank (60), preferably by spot welding, so that an approximately egg-shaped blank (60) forms, which is wound tightly on this one side (P) and in the remaining region loosely in a varying manner.

d) The blank (60) is inserted, preferably with the aid of a conical insertion device, into the tubular jacket (4), such that the tightly wound side (b) lies in a region of the tubular jacket cross-section in which a largest drawn-in circle ($EK_3$ ; $EK_4$ or $EK_5$) of the tubular jacket cross-section touches the jacket tube (4).

4. Method according to claim 3, for producing a metallic exhaust gas catalyst carrier body according to claim 2 with a cross-section surface (94), which has at least one narrow point ($E_9$), characterised in that the cross-section surface (94) is divided into less complex shaped surfaces (91, 92, 93), blanks (60) are produced for these less complex cross-sections and are inserted one after the other, or at the same time, into the tubular jacket (4).

## Revendications

1. Support métallique enroulé de catalyseur de gaz d'échappement, qui est constitué de couches alternées de bandes de tôle lisses (1) et ondulées (2) et qui est entouré d'un tube-enveloppe (4), remarquable par les caractéristiques suivantes :

a) le tube-enveloppe (4) a une section transversale quelconque sans étranglement ($E_9$), à l'exception de sections transversales rondes ou ovales,

b) les bandes de tôle enroulées lisses (1) et ondulées (2) emplissent la section transversale du tube-enveloppe (4) comme si un enroulement serré était réalisé de l'extérieur vers l'intérieur,

c) la partie centrale de l'enroulement se trouve dans la région du centre ($M_3$ ; $M_4$ ; $M_5$) de l'un des plus grands cercles ($EK_3$ ; $EK_4$ ; $EK_5$) inscrits dans la section transversale.

2. Support métallique enroulé de catalyseur de gaz d'échappement, qui est constitué de couches alternées de bandes de tôle lisses (1) et ondulées (2) et qui est entouré d'un tube-enveloppe (4), remarquable par les caractéristiques suivantes :

a) le tube-enveloppe (4) a une section transversale quelconque avec au moins un étranglement ($E_9$),

b) la surface de la section transversale (94) donnée à l'avance par le tube-enveloppe (4) est subdivisée en surfaces partielles (91, 92, 93) de forme simple,

c) les bandes de tôle enroulées lisses (1) et ondulées (2) emplissent les surfaces partielles (91, 92, 93) de forme simple comme si un enroulement serré était réalisé de l'extérieur vers l'intérieur,

d) la partie centrale de ces enroulements se trouve dans la région du centre de l'un des plus grands cercles inscrits dans la section transversale partielle correspondante.

3. Procédé de fabrication d'un support métallique de catalyseur de gaz d'échappement suivant la revendication 1, en enroulant en une ébauche (60) des couches alternées de bandes de tôle lisses (1) et ondulées (2) et en l'introduisant ensuite dans un tube-enveloppe (4), remarquable par les caractéristiques suivantes :

a) on donne à chaque spire ($W_1$, $W_2$, ... $W_n$) constituée chacune d'une bande de tôle lisse (1) et d'une bande de tôle ondulée (2), une longueur prescrite individuellement. On détermine la longueur de chaque spire ($W_1$, $W_2$, ... $W_n$) en fonction de la longueur nécessaire pour le remplissage d'une section transversale donnée à l'avance du tube-enveloppe, le tube-enveloppe (4) ayant une forme quelconque de section transversale sans étranglement ($E_9$), à l'exception de sections transversales rondes ou ovales,

c) on fixe à l'avance (3) chaque spire ($W_1$, $W_2$, ... $W_n$) au moins d'un côté (P) de l'ébauche (60), de préférence par soudage par points, de manière à former une ébauche (60) en forme d'œuf, qui est enroulée de manière serrée sur ce côté (P) et de manière lâche variable dans la partie restante.

d) on introduit l'ébauche (60) dans le tube-enveloppe (4), de préférence à l'aide d'un dispositif d'insertion conique, et cela de façon que le côté (b) enroulé de manière serrée soit dans une partie de la section transversale du tube-enveloppe dans laquelle le cercle inscrit le plus grand possible ($EK_3$ ; $EK_4$ et $EK_5$) de la section transversale du tube-enveloppe touche le tube-enveloppe (4).

4. Procédé suivant la revendication 3, de fabrication d'un support métallique de catalyseur de gaz d'échappement suivant la revendication 2, ayant une surface de section transversale (94) qui comporte au moins un étranglement ($E_9$), caractérisé en ce que l'on subdivise la surface de section transversale (94) en surfaces (91, 92, 93) de formes simples, on fabrique des ébauches (60) pour ces sections transversales simples et on les introduit successivement ou simultanément dans le tube-enveloppe (4).

FIG 1

FIG 2

FIG 3

FIG 4

FIG 5

FIG 6

FIG 7

FIG 8

FIG 9